# EUROPEAN PATENT SPECIFICATION

(11) **EP 4 170 472 B1**
(45) Date of publication and mention of the grant of the patent: **09.07.2025**
(21) Application number: 22200057.2
(22) Date of filing: 24.07.2012
(51) Int. Cl.: G06F 3/048, G06F 3/0481, G06F 3/0483

(54) **MODIFYING TRANSITION SEQUENCES IN A USER INTERFACE DEPENDING ON FREQUENCY OF USE**
MODIFIZIERUNG VON ÜBERGANGSSEQUENZEN IN EINER BENUTZERSCHNITTSTELLE IN ABHÄNGIGKEIT DER BENUTZUNGSFREQUENZ
MODIFICATION DE SÉQUENCES DE TRANSITION DANS UNE INTERFACE UTILISATEUR EN FONCTION DE LA FRÉQUENCE D'UTILISATION

(43) Date of publication of application: 26.04.2023
(62) Divisional of application: 12177566.2
(73) Proprietor: Malikie Innovations Limited, Dun Laoghaire, Dublin A96 VR66 (IE)
(72) Inventor: ERIKSSON, Marcus, 211 40 Malmö (SE); OULD-BRAHIM, Nabil, Kanata, Ontario, K2K 3K1 (CA); AHUJA, Simardeep Singh, Kanata, Ontario, K2K 3K1 (CA); RAI BHATTI, Arjun Singh, Kanata, Ontario, K2K 3K1 (CA)
(74) Representative: MERH-IP Matias Erny Reichl Hoffmann Patentanwälte PartG mbB

(56) References cited:
- EP-A1- 1 607 845
- US-A1- 2009 303 676
- "Flash Hacks", 22 June 2004, O'REILLY MEDIA, INC., ISBN: 978-0-59-600645-7, article SHAM BHANGAL: "Hack 70. Adjust the Animation Complexity Dynamically", pages: 311 - 317, XP055039731

## Description

### TECHNICAL FIELD

The present disclosure relates to user interfaces on electronic devices and in particular transition sequences displayed in the user interface.

### BACKGROUND

Transition sequence animations are used in a user interface of an electronic device to make it easier for the user to understand the user interface, make the interface feel smoother, more natural, and of higher quality, and more engaging. However the use of transition sequence can become repetitive to a user and give the appearance that the user interface is slow or the transition sequence may become distracting with repeated use. Therefore the visual benefit of transition sequence can be lost with repeated use.

Accordingly, systems and methods that enable modification of transition sequence in a user interface remains highly desirable.

EP 1607845 A1 concerns a method and an apparatus for transitions in a user interface. Sham Bhangal: "Hack 70. Adjust the Animation Complexity Dynamically", in "Flash Hacks", 22 June 2004, ISBN 978-0-59-600645-7 relates to an adjustment of a complexity for low-end and high-end machines. US 2009/303676 A1 describes a system and a method for streamlining user interaction with electronic content.

### SUMMARY

In accordance with an aspect of the present disclosure there is provided a method in accordance with annexed claim 1.

In accordance with another aspect of the present disclosure there is provided an electronic device in accordance with the annexed independent electronic device claim.

In accordance with yet another aspect of the present disclosure there is provided a computer readable memory in accordance with the annexed independent computer readable memory claim.

### BRIEF DESCRIPTION OF THE DRAWINGS

Further features and advantages of the present disclosure will become apparent from the following detailed description, taken in combination with the appended drawings, in which:
Figure 1 shows an application that uses a transition sequence in a user interface on a display of a portable electronic device;
Figure 2 shows a transition sequences within the application in a user interface;
Figure 3 shows a method of modifying a transition sequence;
Figure 4 shows a method for modifying a transition sequence in a user interface during the display of a transition sequence;
Figure 5 shows an alternate method of modifying transition sequences in a user interface prior to display of the transition sequence; and
Figure 6 show a schematic representation of an electronic device.

It will be noted that throughout the appended drawings, like features are identified by like reference numerals.

### DETAILED DESCRIPTION

In accordance with an aspect of the present disclosure there is provided a method of displaying transition sequences in a user interface on an electronic device, the method comprising: receiving an action input in the user interface on the electronic device having an associated transition sequence; displaying the transition sequence having one or more associated parameters; and in response to subsequently receiving the action input, displaying a modified transition sequence based on the one or more associated parameters.

In accordance with another aspect of the present disclosure there is provided an electronic device comprising a display; a processor coupled to the display; and a memory containing instructions which when executed by the processor perform: receiving an action input in the user interface on the electronic device having an associated transition sequence; displaying the transition sequence having one or more associated parameters; and in response to subsequently receiving the action input, displaying a modified transition sequence based on the one or more associated parameters.

In accordance with yet another aspect of the present disclosure there is provided a computer readable memory containing instructions for displaying transition sequences in a user interface on an electronic device, the instructions which when executed by a processor performing the method comprising: receiving an action input in the user interface on the electronic device having an associated transition sequence; displaying the transition sequence having one or more associated parameters; and in response to subsequently receiving the action input, displaying a modified transition sequence based on the one or more associated parameters.

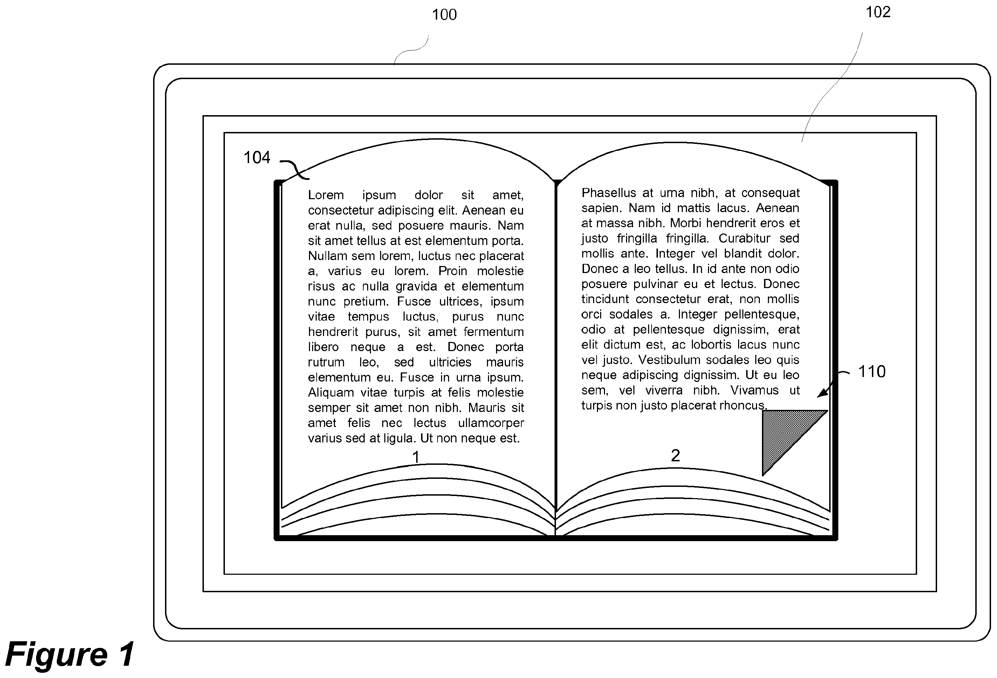

Embodiments are described below, by way of example only, with reference to Figures. 1-6. It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

Transition sequences, which are animations presented in the user interface, are utilized to keep users oriented during user interface state changes and object manipulations. Animations can give the appearance of motion or change over time and can provide feedback, preview the effect of an action, show the relationship between objects, or draw attention to change. The presentation of transition sequences can improve the user experience on the device, however overuse can provide the appearance of a delay or slow performance. When a particular action is performed on the user interface in a defined time frame or a number or repetitions has occurred, it is desirable to modify the transition sequence so that it does not become fatiguing to the user. The transition sequence may be an animation which occurs when an event is triggered or may be associated with motion of objects on the display such as a menu or icon. For example a menu drop down, activation or movement of an icon, movement of a window, task or status bar functions, item selection, or application switching each have transition sequences defined either in the motion of the object itself, or an animation which is presented when an event or notification occurs. The modification of the transition sequence may be performed by increasing the speed of the transition sequence, size, transparency, removing portions or modifying the sequence of the transition sequence, or using an alternate animations for the transition sequence. For example when sending an e-mail, an animation of the e-mail message may occur to provide an indication that the message has been sent, however if the user is sending a large number of e-mail messages in a short period of time it may fatigue the user if the animation is shown repeated. To improve the impact of an animation the transition sequence may be modified based upon specific parameters associated with the appearance of the transition sequence. For example the transition sequence speed may be increased based upon the number of times it is executed, or the transition sequence opacity may be increased over a period of time to improve the user experience by reducing the impact of the appearance.

Figure 1 shows an application on a display of a portable electronic device. In this exemplary embodiment the portable electronic device 100 is displaying a reading application 104 on the display 102. The application 104 has a transition sequence 110 such as a page turn which is presented as an animation. The page turn transition sequence 110 is shown when, for example, an action input such as a swipe gesture on a touch-sensitive display 102, or a page advance input, is received from a user to turn the page. The user action input has an associated transition sequence which is displayed to provide additional feedback to the user or improve the appearance of the graphical user interface.

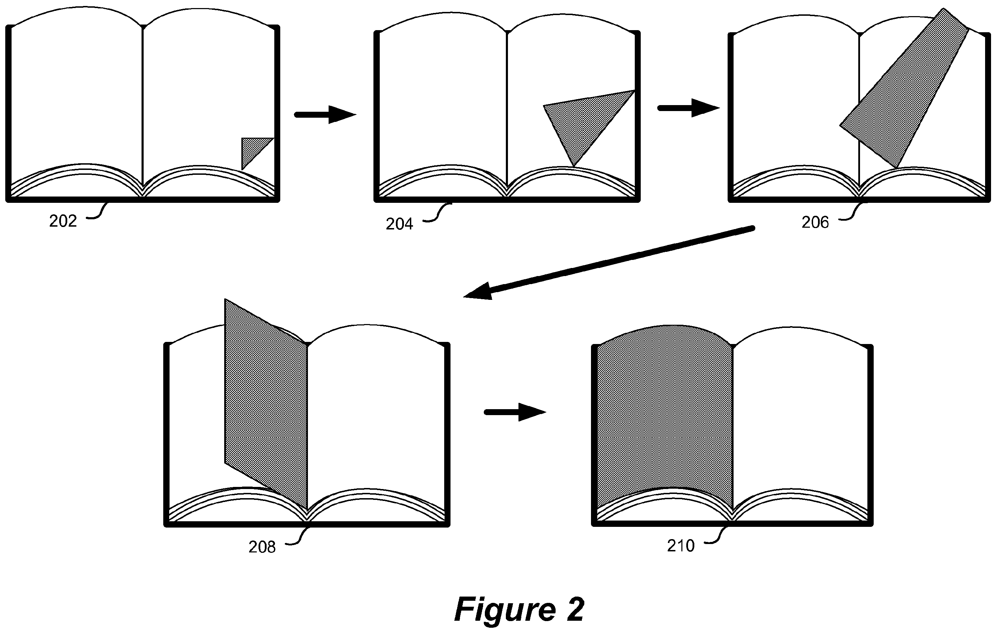

As shown in Figure 2 the transition sequence between pages can be presented by an animation of a turning page. The page turn 202 animation progresses through images 204, 206, 208, 210 to show the turning of a page. The length of the animation may occur over a defined length of time with more animations being generated between states. The modification of the transition sequences may be performed by increasing the speed for displaying all of the animation sequence, changing the transparency or size, removing or simplifying the animation, or using an alternate transition sequences to simplify the appearance. For example after the full transition sequence 202-210 is shown, on subsequent activations on transition sequences 202, 206 and 210 may be shown to increase the speed or the same images used at an increased speed. If the user either does not use the application for a period of time, or closes and restarts the application the default transition sequence may be used. In this manner the user is presented with the full transition sequence experience but does not become fatigued if it is used repetitively. The page transition sequence is used as an example of the transition sequence, although any transition sequence used within a user interface may be modified depending on the user interface requirements.

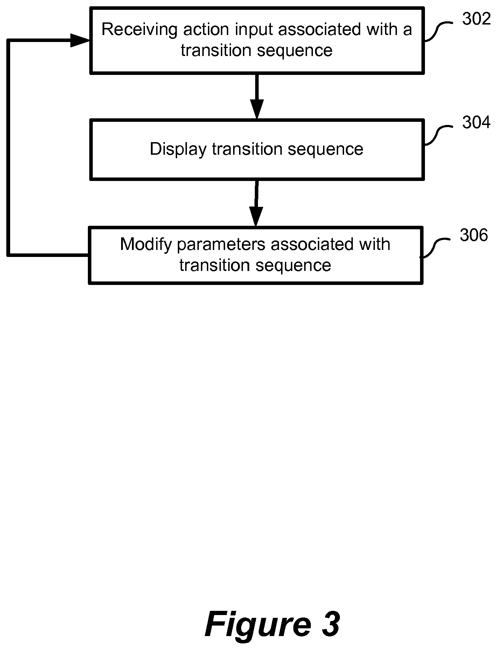

Figure 3 shows a method of modifying a transition sequence in a user interface of an electronic device. An action input is received (302) in the user interface on the electronic device having an associated transition sequence. The transition sequence is displayed having one or more associated parameters (304) in response to the received action input. In response to subsequently receiving the action input, the parameters associated with the transitions sequence are modified (306) and the modified transition sequence is displayed based on the one or more associated parameters. The modification of the transition sequence may also include removing the transition sequences completely, or modifying one or more parameters so that the transition sequence is not visible if it has occurred a certain number of times. The transition sequence may be removed after a defined period of time, a number of counts or as a result of a computation of a function used to define the transition sequence modification.

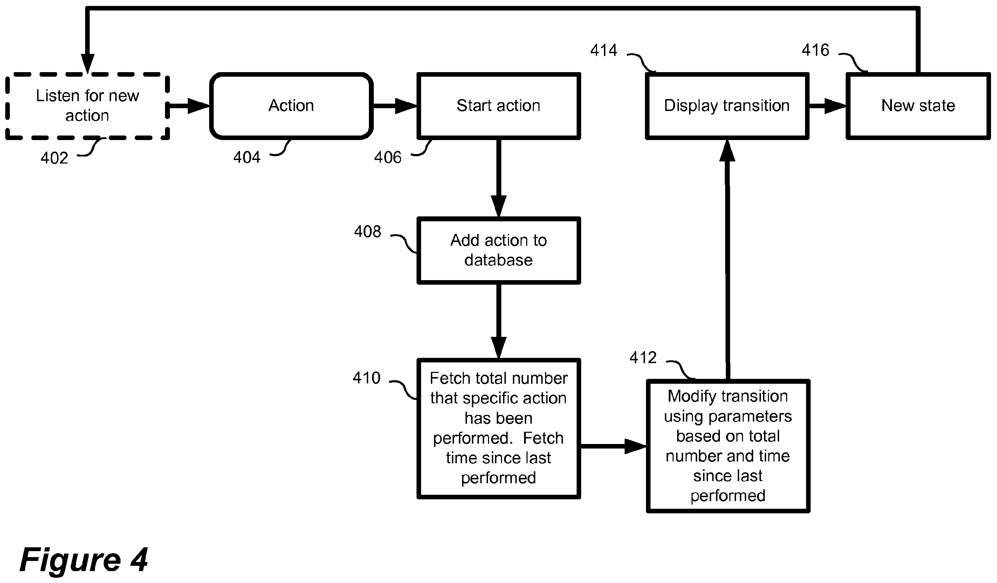

Figure 4 shows a method for modifying transition sequence in a user interface during display of the transition sequence. An application or user interface listens for a new action to occur (402) which has an associated transition sequence. The action may either be directly performed on a input device by a user, such as a gesture, touch input, mouse selection, keyboard selection or associated with an input event that has previously occurred (404). The action is commenced and the start of the transition sequence is displayed (406). A frequency or action count is incremented in a database (408) to increase the total amount the transition sequence has been performed. The system then takes the a frequency, based on a number of occurrences and/or the time since the action was last performed, which are used to modify certain pre-defined parameters or aspects of a transition sequence. The aspects of the transition sequence can be defined by parameters of the animation/transition sequence such as a total duration time, opacity, speed, depth etc. The parameters values may be defined for each action count or defined for a range of action counts, for example the original transition sequence may occur for the first 5 occurrences but may be modified by a first set of parameters on the next 6 to 10 occurrences, and modified by a second set of parameters on the next 11 to 15 occurrences. The parameters may define frequency values used as a direct scaling factor of the transition sequence parameter. For example for every 10^{th} transition sequence the speed in increased by a factor 10 fold. Alternatively, removal or de-activation of the transition sequence may also be defined, for example after the 20^{th} transition sequence the transition sequence would be removed. The parameter values may also be associated with time ranges relative to the number of the action count which may be used as condition factors to determine application of the parameters. For example the transition sequence counter may be reset if they do not occur in a specified period of time. The numbers from the parameter database may need to be multiplied, or only impact the animation/transition sequence values within certain thresholds, for example if an certain transition sequence/animation has been shown 10 times an 1000 fold change in the transition sequence/animation but only up to a certain value. The modification of the parameters may also be as a defined linear or non-linear function for all counts of the transition sequence, or the functions may be used in combination with a discontinuous table defining the transition sequence parameters. The modified transition sequence is then displayed (416) in the user interface, and is in a new state (418) awaiting further interactions (402).

The identification of the frequency of the transition sequence and the parameters by which the transition sequence is modified may be defined in a number of different ways. For example a transition sequence may have be modified directly by a scaling of frequency defined by a time interval or count of the transition sequence occurrence, where the scaling factor is applied to a set of predefined parameters associated with the transition sequence. For example an associated database may track the time between activation of the transition sequence and a count of the number of times that the transition sequence has occurred.

### Transition sequence A

| | |
|---|---|
| Time | 10 |
| Count | 3 |

The transition sequence may be modified when the frequency is a count of occurrences using defined parameters that are applied to the transition sequence, for example speed and transparency. For example as shown below, defines specific frequency count ranges having defined parameters that are applied to the transition sequence.

### Transition sequence B (count x)

| Count | Speed | Transparency |
|---|---|---|
| 1-5 | 200 | 0 |
| 6-10 | 100 | 20 |
| 11+ | 50 | 60 |

The transition sequence may be modified relative to a time frequency interval in which the transition sequence occurs and the parameters that are applied to the transition sequence based upon the determined count. For example as shown below, time ranges are defined and associated parameters.

### Transition sequence C (time x)

| Time (sec) | Speed | Transparency |
|---|---|---|
| 0 | 200 | 0 |
| >10 | 100 | 20 |
| >30 | 50 | 60 |
| >50 | 0 | 100 |

The transition sequence may be modified where the frequency is a relative count or time interval between occurrences and define a sequence of unique transition sequence animations that are displayed based upon the account.

### Transition sequence D (count x)

| Count | Sequence |
|---|---|
| 1 | X |
| 2 | Y |
| 5 | Z |
| 10+ | - |

### Transition sequence E (time y)

| Time (sec) | Sequence |
|---|---|
| 0 | X |
| >10 | Y |
| >30 | Z |
| >60 | X |

Alternatively the parameters may be defined by a combination of frequency parameters including a count and time interval or also be defined relative to user actions within the operating system. For example if a user has multiple programs open, a first set of transition sequences may be applied where as if only a single program is open a second set of transition sequences may be applied. In addition the parameters may only apply to a specific time interval relative to operating system events such as first start-up or re-boot, so that animations are only shown to provide a desired effect during specific time period or interval to maintain their impact. The transition sequence may alternatively be defined by a function based upon the number of executions of the transition sequence. For example a continuous function may be defined for one or more parameters associated with the transition sequence for example the transition sequence may be modified by: Speed = Max(50, 200 - Count*2) which results in a linear function to modify the transition sequence, however non-linear functions may be defined such as: Quadratic like Speed = 1/Count. The transition sequence would then be modified based upon the result of the function and not require a defined database to identify the modification of the transition sequence. The function may be also used in a combination with defined continuous and discontinuous function or parameters providing more variability in the modifications of the transition sequence.

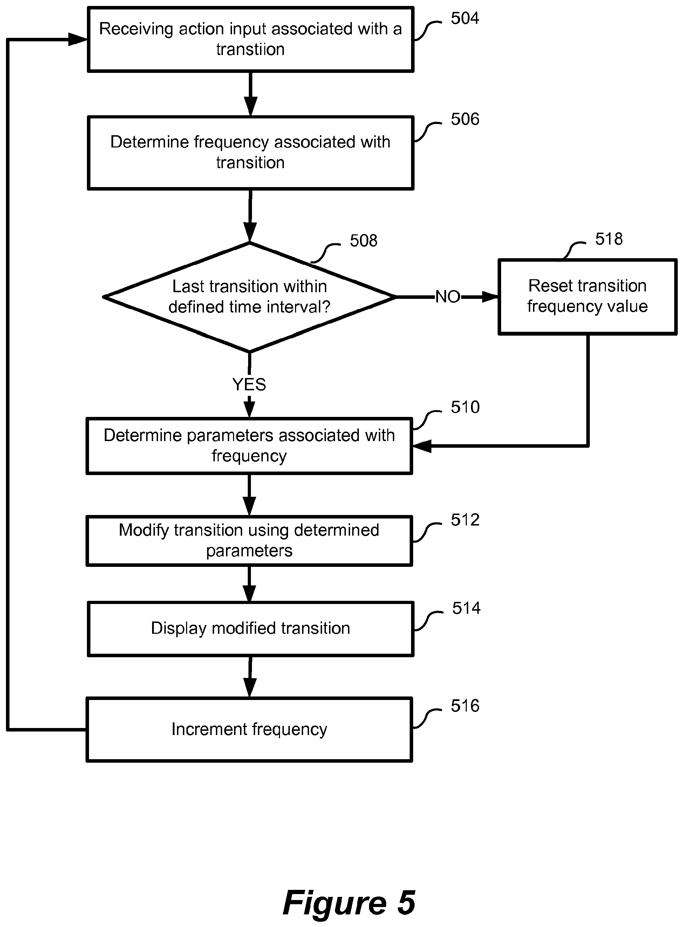

Figure 5 shows an alternate method of modifying a transition sequence for display on an electronic device prior to display of the transition sequence. When an action input is received by the user an associated transition sequence is determined (504). A frequency associated with the transition sequence is determined (506). The frequency may be a number of times the transition sequence has been executed, the time interval since the last transition sequence or combination therein. If the last transition sequence was within the defined time interval (YES at 508) the parameters associated with the transition sequence are retrieved from a database. The parameters may be defined parameters of the transition sequence such as speed, opacity or transparency, depth, color, size, etc., or may be multiplication values that are applied to pre-defined values for the features of the transition sequence. The parameters may also define alternate transition sequence or removal of frames or features of the transition sequence. The transition sequence is then modified based upon the determined parameter values (512). The transition sequence is then displayed (514) using the determined parameters values. The frequency is then incremented (516). If a defined time interval has been exceed, (NO at 508), the frequency is reset and the determined parameters to a default or previous setting (518). Depending on how the transition sequence/animation is defined the determination of the parameters may occur prior to commencement of execution of the transition sequence or during execution of the transition sequence. The parameters to be modified may be defined relative to a number of occurrences of the transition sequence or time intervals or a combination thereof.

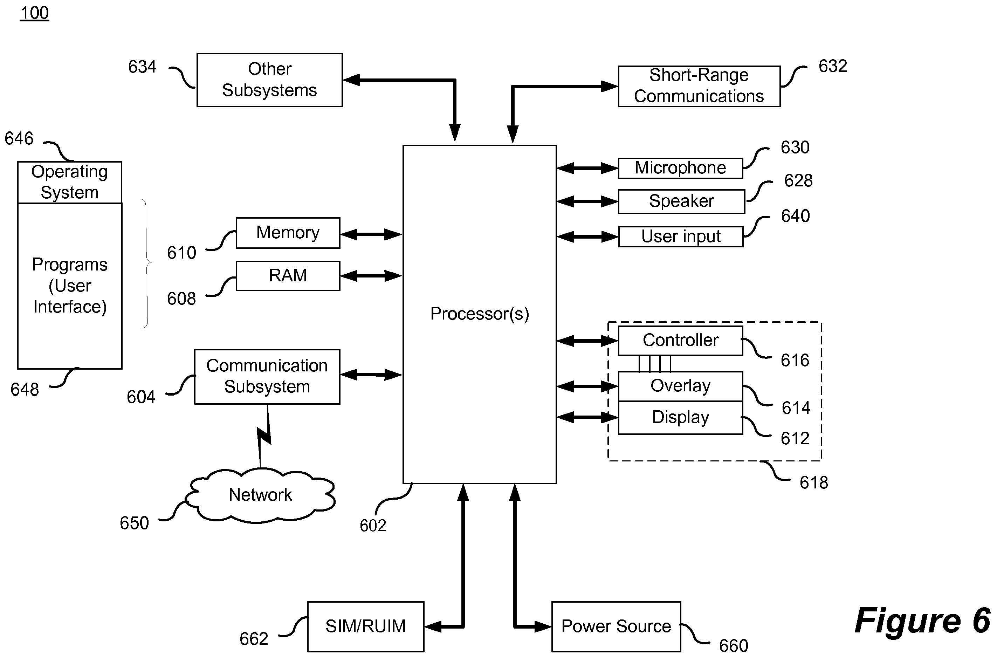

Figure 6 is a schematic depiction of an example electronic device for modifying transition sequence in a user interface. As shown by way of example in Figure 6, the mobile device 100, includes a processor (or microprocessor) 602 for executing one or more applications, memory in the form of flash memory 610 and RAM 608 (or any equivalent memory devices) for storing an operating system 646 and one or more applications 648 providing the user interface with which the user interacts with the device.

The processor receives power from a power supply 660, which may be a direct connection or provided by a battery source.

As shown by way of example in Figure 6, the electronic device 100 may include a communication subsystem 604 which provides radiofrequency (RF) transceiver to communicate through a wireless network 650. The electronic device 100 may be in a portable form factor such as a smart phone, tablet, net book, laptop, portable computing device or an integrated mobile computer device that may access different networks wirelessly. The RF transceiver for communication with a wireless network 650 using a wireless communication protocols such as, for example but not limited to, GSM, UMTS, LTE, HSPDA, CDMA, W-CDMA, Wi-MAX, Wi-Fi etc. A subscriber identify module (SIM) card 662 may be provided depending on the access technology supported by the device. The communication subsystem 604 may also provide wired communication through a network.

Optionally, where the device is a voice-enabled communications device such as, for example, a tablet, smart-phone or cell phone, the device would further include a microphone 630 and a speaker 628. Short-range communications 632 is provided through wireless technologies such as Bluetooth^{™} or wired Universal Serial Bus^{™} connections to other peripheries or computing devices or by other device sub-systems 634 which may enable access tethering using communications functions of another mobile device. In a tethering configuration the mobile device 100 may provide the network information associated with the tethered or master device to be used to access the network. This device 100 may optionally include a Global Positioning System (GPS) receiver chipset or other location-determining subsystem.

The operating system 646 and the software components that are executed by the microprocessor 602 are typically stored in a persistent store such as the flash memory 610, which may alternatively be a read-only memory (ROM) or similar storage element (not shown). Those skilled in the art will appreciate that portions of the operating system 646 and the software components, such as specific device applications, or parts thereof, may be temporarily loaded into a volatile store such as the RAM 608. Other software components can also be included, as is well known to those skilled in the art. User input 640 may be provided by integrated input devices such as a keyboard, touchpad, touch screen, mouse, camera or positing apparatus to actuate transition sequence. The electronic device 100 may have an integrated touch-sensitive display 618 having a display screen 612, with a touch-sensitive overlay 614 coupled to a controller 616 for enabling interaction with the electronic device 100. The display portion of the electronic device 100 may not necessarily be integrated but may be coupled to the electronic device 100.

Although certain methods, apparatus, computer readable memory, and articles of manufacture have been described herein, the scope of coverage of this disclosure is not limited thereto. To the contrary, this disclosure covers all methods, apparatus, computer readable memory, and articles of manufacture fairly falling within the scope of the appended claims.

Although the following discloses example methods, system and apparatus including, among other components, software executed on hardware, it should be noted that such methods, system and apparatus are merely illustrative and should not be considered as limiting. For example, it is contemplated that any or all of these hardware and software components could be embodied exclusively in hardware, exclusively in software, exclusively in firmware, or in any combination of hardware, software, and/or firmware. Accordingly, while the following describes example methods and apparatus, persons having ordinary skill in the art will readily appreciate that the examples provided are not the only way to implement such methods, system and apparatus.

## Claims

1. A method of displaying transition sequences (110) in a user interface on an electronic device (100), the method comprising:
receiving (302, 504) an action input in the user interface on the electronic device (100) having an associated transition sequence (110);
displaying (304) the transition sequence (110) having a plurality of associated parameters, wherein the associated parameters comprise opacity, defining an opacity of the transition sequence (110), and further comprise one or more associated parameters selected from the group consisting of duration, speed, depth and size;
when the transition sequence (110) is displayed, incrementing (408) a frequency count value in a database to increase the total amount the transition sequence (110) has been performed; and
in response to subsequently receiving the action input, displaying (514) a modified transition sequence (110) based on the one or more associated parameters, the modified transition sequence (110) determined by a non-linear function using the frequency count value to modify the one or more associated parameters of the transition sequence (110), wherein the modified transition sequence (110) has a decreased opacity the more the transition sequence (110) is displayed within a defined frequency interval.

2. The method of claim 1 further comprising resetting (518) the frequency count value when (508) a time interval between subsequent displays of the transition sequence (110) is larger than a pre-defined time interval value.

3. The method of any one of claims 1 or 2 wherein determining (510) the one or more associated parameters of the modified transition sequence (110) is based on a combination of the frequency count value and a time interval between subsequent displays of the transition sequence (110).

4. The method of any one of claims 1 or 2 wherein each of the one or more associated parameters is defined in relation to the frequency count value, wherein the frequency count value is a scaling factor of the one or more associated parameters.

5. The method of any one of claims 1 to 4 wherein the one or more associated parameters define further define alternate animations of the transition sequence (110) to be displayed based upon the determined frequency count value.

6. The method any one of claims 1 to 5 wherein the one or more associated parameters are determined from the database stored in the electronic device (100) defining for the transition sequence (110) one or more frequency count values, or one or more frequency count value ranges, and the one or more associated parameters for each associated with the one or more frequency count values or the one or more frequency count value ranges.

7. An electronic device (100) comprising:
a display (612, 618);
a processor (602) coupled to the display (612, 618); and
a memory (610) containing instructions which when executed by the processor (602) perform the method of any of claims 1 to 6.

8. A computer readable memory containing instructions for displaying (304) transitions in a user interface on an electronic device (100), which instructions, when executed by a processor, perform the method steps of any of claims 1 to 6.

## Patentansprüche

1. Verfahren zum Anzeigen von Übergangssequenzen (110) in einer Benutzerschnittstelle auf einer elektronischen Vorrichtung (100), wobei das Verfahren Folgendes aufweist:
Empfangen (302, 504) einer Aktionseingabe in der Benutzerschnittstelle auf der elektronischen Vorrichtung (100) mit einer assoziierten Übergangssequenz (110);
Anzeigen (304) der Übergangssequenz (110) mit einer Vielzahl von assoziierten Parametern, wobei die assoziierten Parameter Opazität aufweisen, die eine Opazität der Übergangssequenz (110) definiert, und ferner einen oder mehrere assoziierte Parameter aufweisen, die aus der Gruppe ausgewählt sind, die aus Dauer, Geschwindigkeit, Tiefe und Größe besteht;
Erhöhen (408) eines Frequenzzählwerts in einer Datenbank, um die Gesamtzahl, dass die Übergangssequenz (110) durchgeführt wurde, zu erhöhen, wenn die Übergangssequenz (110) angezeigt wird; und
Anzeigen (514) einer modifizierten Übergangssequenz (110) auf der Grundlage von dem einen oder den mehreren assoziierten Parametern als Reaktion auf das nachfolgende Empfangen der Aktionseingabe, wobei die modifizierte Übergangssequenz (110) durch eine nichtlineare Funktion unter Verwendung des Frequenzzählwerts bestimmt wird, um den einen oder die mehreren assoziierten Parameter der Übergangssequenz (110) zu modifizieren, wobei die modifizierte Übergangssequenz (110) eine verringerte Opazität aufweist, je mehr die Übergangssequenz (110) innerhalb eines definierten Frequenzintervalls angezeigt wird.

2. Verfahren nach Anspruch 1, ferner mit einem Zurücksetzen (518) des Frequenzzählwerts, wenn (508) ein Zeitintervall zwischen nachfolgenden Anzeigen der Übergangssequenz (110) größer als ein vordefinierter Zeitintervallwert ist.

3. Verfahren nach einem der Ansprüche 1 oder 2, wobei das Bestimmen (510) des einen oder der mehreren assoziierten Parameter der modifizierten Übergangssequenz (110) auf einer Kombination von dem Frequenzzählwert und einem Zeitintervall zwischen nachfolgenden Anzeigen der Übergangssequenz (110) beruht.

4. Verfahren nach einem der Ansprüche 1 oder 2, wobei jeder des einen oder der mehreren assoziierten Parameter in Bezug auf den Frequenzzählwert definiert ist, wobei der Frequenzzählwert ein Skalierungsfaktor des einen oder der mehreren assoziierten Parameter ist.

5. Verfahren nach einem der Ansprüche 1 bis 4, wobei der eine oder die mehreren assoziierten Parameter ferner alternative Animationen der Übergangssequenz (110) definieren, die auf der Grundlage des bestimmten Frequenzzählwerts angezeigt werden sollen.

6. Verfahren nach einem der Ansprüche 1 bis 5, wobei der eine oder die mehreren assoziierten Parameter aus der Datenbank bestimmt werden, die in der elektronischen Vorrichtung (100) gespeichert ist, die für die Übergangssequenz (110) einen oder mehrere Frequenzzählwerte oder einen oder mehrere Frequenzzählwertbereiche und den einen oder die mehreren assoziierten Parameter für jeden, der mit dem einen oder den mehreren Frequenzzählwerten oder dem einen oder den mehreren Frequenzzählwertbereichen assoziiert ist, definiert.

7. Elektronische Vorrichtung (100) mit:
einer Anzeige (612, 618);
einem Prozessor (602), der mit der Anzeige (612, 618) gekoppelt ist; und
einem Speicher (610), der Anweisungen enthält, die bei Ausführung durch den Prozessor (602) das Verfahren nach einem der Ansprüche 1 bis 6 durchführen.

8. Von einem Computer lesbarer Speicher, der Anweisungen zum Anzeigen (304) von Übergängen in einer Benutzerschnittstelle auf einer elektronischen Vorrichtung (100) enthält, wobei die Anweisungen bei Ausführung durch einen Prozessor die Verfahrensschritte nach einem der Ansprüche 1 bis 6 durchführen.

## Revendications

1. Procédé d'affichage de séquences de transition (110) dans une interface utilisateur sur un dispositif électronique (100), le procédé comprenant :
la réception (302, 504) d'une entrée d'action dans l'interface utilisateur sur le dispositif électronique (100) ayant une séquence de transition associée (110) ;
l'affichage (304) de la séquence de transition (110) ayant une pluralité de paramètres associés, dans lequel les paramètres associés comprennent une opacité, définissant une opacité de la séquence de transition (110), et comprennent en outre un ou plusieurs paramètres associés sélectionnés dans le groupe constitué de la durée, de la vitesse, de la profondeur et de la taille ;
lorsque la séquence de transition (110) est affichée, l'incrémentation (408) d'une valeur de comptage de fréquence dans une base de données pour augmenter la quantité totale que la séquence de transition (110) a été effectuée ; et
en réponse à la réception ultérieure de l'entrée d'action, l'affichage (514) d'une séquence de transition modifiée (110) sur la base des un ou plusieurs paramètres associés, la séquence de transition modifiée (110) étant déterminée par une fonction non linéaire utilisant la valeur de comptage de fréquence pour modifier les un ou plusieurs paramètres associés de la séquence de transition (110), dans lequel la séquence de transition modifiée (110) a une opacité diminuée plus la séquence de transition (110) est affichée dans un intervalle de fréquence défini.

2. Procédé selon la revendication 1, comprenant en outre la réinitialisation (518) de la valeur de comptage de fréquence lorsque (508) un intervalle de temps entre des affichages ultérieurs de la séquence de transition (110) est supérieur à une valeur d'intervalle de temps prédéfinie.

3. Procédé selon l'une quelconque des revendications 1 ou 2, dans lequel la détermination (510) des un ou plusieurs paramètres associés de la séquence de transition modifiée (110) est basée sur une combinaison de la valeur de comptage de fréquence et d'un intervalle de temps entre des affichages ultérieurs de la séquence de transition (110).

4. Procédé selon l'une quelconque des revendications 1 ou 2, dans lequel chacun des un ou plusieurs paramètres associés est défini par rapport à la valeur de comptage de fréquence, dans lequel la valeur de comptage de fréquence est un facteur d'échelle des un ou plusieurs paramètres associés.

5. Procédé selon l'une quelconque des revendications 1 à 4, dans lequel les un ou plusieurs paramètres associés définissent en outre des animations alternatives de la séquence de transition (110) à afficher sur la base de la valeur de comptage de fréquence déterminée.

6. Procédé selon l'une quelconque des revendications 1 à 5, dans lequel les un ou plusieurs paramètres associés sont déterminés à partir de la base de données stockée dans le dispositif électronique (100) définissant pour la séquence de transition (110) une ou plusieurs valeurs de comptage de fréquence, ou une ou plusieurs plages de valeurs de comptage de fréquence, et les un ou plusieurs paramètres associés pour chacun associé aux une ou plusieurs valeurs de comptage de fréquence ou aux une ou plusieurs plages de valeurs de comptage de fréquence.

7. Dispositif électronique (100) comprenant :
un affichage (612, 618) ;
un processeur (602) couplé à l'affichage (612, 618) ; et
une mémoire (610) contenant des instructions qui, lorsqu'elles sont exécutées par le processeur (602), réalisent le procédé selon l'une quelconque des revendications 1 à 6.

8. Mémoire lisible par ordinateur contenant des instructions pour afficher (304) des transitions dans une interface utilisateur sur un dispositif électronique (100), lesquelles instructions, lorsqu'elles sont exécutées par un processeur, réalisent les étapes de procédé selon l'une quelconque des revendications 1 à 6.
